(19) **Europäisches Patentamt European Patent Office Office européen des brevets**

(11) **EP 3 637 733 B1**

(12) **EUROPEAN PATENT SPECIFICATION**

(45) Date of publication and mention of the grant of the patent:
**28.07.2021 Bulletin 2021/30**

(21) Application number: **18825057.5**

(22) Date of filing: **13.04.2018**

(51) Int Cl.:
*H04L 29/08* (2006.01)   *H04L 29/06* (2006.01)

(86) International application number:
**PCT/CN2018/083088**

(87) International publication number:
**WO 2019/001092 (03.01.2019 Gazette 2019/01)**

(54) **LOAD BALANCING ENGINE, CLIENT, DISTRIBUTED COMPUTING SYSTEM, AND LOAD BALANCING METHOD**

LASTAUSGLEICHSMASCHINE, CLIENT, VERTEILTES RECHENSYSTEM UND LASTAUSGLEICHSVERFAHREN

MOTEUR D'ÉQUILIBRAGE DE CHARGE, CLIENT, SYSTÈME INFORMATIQUE DISTRIBUÉ, ET PROCÉDÉ D'ÉQUILIBRAGE DE CHARGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2017 CN 201710526509**

(43) Date of publication of application:
**15.04.2020 Bulletin 2020/16**

(73) Proprietor: **Huawei Technologies Co., Ltd.**
**Longgang District**
**Shenzhen, Guangdong 518129 (CN)**

(72) Inventors:
• **CHI, Jianchun**
**Shenzhen**
**Guangdong 518129 (CN)**

• **ZHENG, Wei**
**Shenzhen**
**Guangdong 518129 (CN)**
• **WANG, Kemin**
**Shenzhen**
**Guangdong 518129 (CN)**

(74) Representative: **Epping - Hermann - Fischer**
**Patentanwaltsgesellschaft mbH**
**Schloßschmidstraße 5**
**80639 München (DE)**

(56) References cited:
**WO-A1-2016/054272      CN-A- 101 741 907**
**CN-A- 101 753 558      CN-A- 102 571 849**
**US-A1- 2013 097 321      US-A1- 2015 281 016**
**US-A1- 2016 094 451**

EP 3 637 733 B1

**Description**

**TECHNICAL FIELD**

The present invention relates to the electronics field, and in particular, to a load balancing engine, a client, a distributed computing system, and a load balancing method.

**BACKGROUND**

With development of computing technologies, some tasks need to be computed by using a quite strong computing capability. If centralized computing is used, a quite long time needs to be consumed to complete the computing. However, if distributed computing is used, a task may be divided into many small subtasks, and then the subtasks are allocated to a plurality of computers for processing. This can reduce an overall computing time and greatly improve computing efficiency.

For the distributed computing, task scheduling is a most basic and challenging issue. The task scheduling means that a group of tasks and several computing nodes that can execute these tasks in parallel are provided, to find a method that can be used to effectively schedule this group of tasks to the computing nodes for computing, so as to achieve a shorter task completion time, a larger throughput, higher resource utilization, and the like. Load balancing (LB) is a key factor that needs to be considered during task scheduling, and is also a key to optimizing distributed computing performance. The load balancing directly determines use efficiency of a distributed computing resource and application performance.

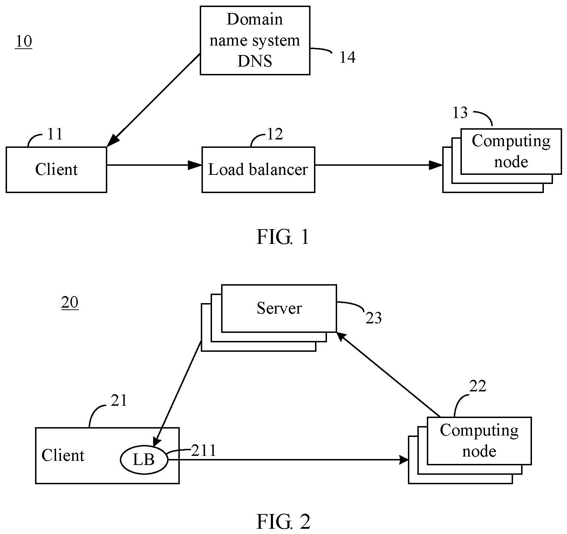

To resolve the load balancing issue, the prior art provides a centralized load balancing solution. As shown in FIG. 1, in a distributed computing system 10, an independent load balancer 12 is disposed between a client 11 and a plurality of computing nodes 13. The load balancer 12 may be a dedicated hardware device such as various types of hardware for load balancing processing that are provided by the corporation F5, or may be load balancing software such as LVS, HAProxy, and Nginx. When the client 11 calls a target service, the client 11 initiates a service request to the load balancer 12. The load balancer 12 forwards, based on a specific load balancing policy, the service request to the computing node 13 that provides the target service. The client 11 needs to discover the load balancer 12 by using a domain name system (DNS) 14. Specifically, the domain name system 14 configures a DNS domain name for each service, and the domain name is directed to the load balancer 12. However, a disadvantage of the centralized load balancing solution lies in that traffic called by all services passes through the load balancer 12. When a quantity of services and a calling amount are quite large, the load balancer 12 is likely to become a bottleneck constraining performance of the distributed computing system 10, and once the load balancer 12 becomes faulty, the entire distributed computing system 10 is disastrously affected.

For the disadvantage of the centralized load balancing solution, the prior art further provides another client load balancing solution that may also be referred to as a soft load balancing solution. As shown in FIG. 2, in a distributed computing system 20, a load balancing LB component 211 is integrated into a service process of a client 21 in a form of a library file. In addition, a server 23 provides a service registry to support service self-registration and self-discovery. When being enabled, each computing node 22 first registers with the server 23, and an address of a service provided by the computing node is registered into the service registry. In addition, each computing node 22 may further periodically report a heartbeat to the service registry, to indicate a survival status of the service of the computing node 22. When the service process in the client 21 needs to access a target service, the service registry needs to be first queried, by using the embedded LB component 211, for an address list corresponding to the target service. Then a target service address is selected based on a specific load balancing policy. Finally, a request is initiated to a computing node 22 indicated by the target service address. It should be noted that in the load balancing policy used in this solution, only a load balancing issue of the computing node providing the target service needs to be considered. However, a disadvantage of the client load balancing solution is as follows: First, if a plurality of different language stacks are used in a development enterprise, a plurality of different clients need to be correspondingly developed, and consequently research, development, and maintenance costs are significantly increased. Second, after a client is delivered to a user, if a library file needs to be upgraded or code of a library file needs to be modified, users need to cooperate, and consequently an upgrade process may be hindered because of insufficient cooperation between the users.

In view of this, the present invention provides a new load balancing solution, to overcome various problems existing in the prior art.

**SUMMARY**

Embodiments of the present invention provide a new load balancing solution, to resolve a prior-art problem that large-traffic service calling cannot be processed. In addition, development costs can be reduced, and an upgrade and maintenance are facilitated.

According to a first aspect, an embodiment of the present invention provides a load balancing engine, applied to a distributed computing system, and including: a load information management module, configured to obtain global load information of the distributed computing system, where the global load information indicates respective load of M computing nodes in the distributed computing system; a service information management module, configured to obtain global service information of the distributed computing system, where the global service information indicates types of services provided by the M computing nodes, and M is a natural number greater than 1; a policy computing module, configured to perform load balancing computing for a first service type by using the global load information and the global service information, to generate a first load balancing policy corresponding to the first service type, where the first service type is at least one of the types of the services provided by the M computing nodes, and the first load balancing policy indicates distribution information of a service message corresponding to the first service type in the M computing nodes; and a policy release module, configured to release the first load balancing policy to a client. The load balancing engine is only responsible for computing a load balancing policy and sending the generated load balancing policy to clients, and the clients independently schedule service messages. Therefore, impact of a large amount of service calling on the load balancing engine can be avoided, and when service calling is processed in a centralized manner, a system fault caused by a failure of addressing the large-traffic service calling is avoided. In addition, when upgrading the distributed system, a developer needs to upgrade only the load balancing engine, thereby facilitating the upgrade. Moreover, even if the developer uses a plurality of language stacks, only one load balancing engine needs to be developed for different language stacks, and the clients can call, by using generic code, a load balancing policy released by the load balancing engine, thereby greatly reducing development costs.

In a possible implementation, the load balancing engine further includes a global service view, configured to obtain a service calling relationship between the M computing nodes; and the policy computing module is configured to perform load balancing computing for the first service type by using the global load information, the global service information, and the service calling relationship, to generate the first load balancing policy. A service may need to call another service to process a service message of a client. Therefore, if a computing node on which a service of the first service type is located has low load, but another computing node on which another service called by the computing node is located has high load, quality of service is also affected. Therefore, when the first load balancing policy is generated, both the load of the computing node on which the service of the first service type is located and the load of the another computing node that has a calling relationship with the computing node are considered. This helps improve overall computing performance of the distributed computing system and reduce a service delay.

In a possible implementation, the policy computing module is specifically configured to: determine, from the M computing nodes based on the global service information, a target computing node that provides a service of the first service type; determine, from the M computing nodes based on the service calling relationship, a related computing node that has a calling relationship with the service that is of the first service type and that is provided by the target computing node; and determine, based on the global load information, load of the target computing node and the related computing node, and perform load balancing computing, to generate the first load balancing policy.

In a possible implementation, the policy computing module is specifically configured to generate the first load balancing policy based on the following target function:

$$\min \Phi(S) = \min \frac{1}{n} \sum (t(S_i) - \bar{t})^2$$

where $t(S_i)$ indicates a service delay of a message chain of an $i^{th}$ service message, and $t$ indicates an average value of service delays of message chains of n service messages. In this implementation, relatively good load balancing can be implemented by balancing a relationship between a throughput and a response time.

In a possible implementation, the policy computing module is further configured to perform load balancing computing based on a preset service delay and by using the global load information, the global service information, and the service calling relationship, to generate a second load balancing policy, where the second load balancing policy is used to instruct the M computing nodes to perform service adjustment; and the policy release module is further configured to release the second load balancing policy to the M computing nodes. By adjusting existing services of the M computing nodes, the computing performance of the distributed computing system can be further optimized, and the service delay can be further reduced.

In a possible implementation, the second load balancing policy instructs to adjust a service message distribution ratio between at least two computing nodes that have a service calling relationship.

In a possible implementation, the second load balancing policy instructs to adjust a service location between computing nodes that have a service calling relationship.

In a possible implementation, the second load balancing policy instructs to add or delete a service between computing nodes that have a service calling relationship.

In a possible implementation, all of the global load information, the global service information, and the service calling relationship are periodically obtained; and the policy computing module is configured to periodically compute the first load balancing policy or the second load balancing policy, and the policy release module periodically releases the first load balancing policy or the second load balancing policy. By periodically updating a load balancing policy, performance of the distributed computing system can be always at a relatively high level.

According to a second aspect, an embodiment of the present invention provides a client, applied to a distributed computing system, where the distributed computing system includes a load balancing engine and M computing nodes, M is a natural number greater than 1, and the client includes: a local cache, configured to obtain and cache a first load balancing policy released by the load balancing engine, where the first load balancing policy indicates distribution information of a service message of a first service type; a service management module, configured to receive a first service request; and a load policy computing module, configured to: query the local cache; and if the first load balancing policy stored in the local cache matches the first service request, determine, from the M computing nodes based on the distribution information indicated by the first load balancing policy, a target computing node matching the first service request, where the service management module is further configured to send, to the target computing node based on the distribution information indicated by the first load balancing policy, a service message corresponding to the first service request. The client only needs to receive and cache a load balancing policy corresponding to each service type. When a service message corresponding to a service type needs to be called, the service message can be scheduled by querying the cached load balancing policy. Therefore, even if a developer uses different language stacks, a client does not need to be independently developed for each language stack. Some generic code can be used to implement receiving and querying of a load balancing policy. This greatly reduces research and development costs, and also reduces obstruction of upgrading the distributed computing system.

According to a third aspect, an embodiment of the present invention further provides a distributed computing system, including the load balancing engine according to any one of the first aspect or the possible implementations of the first aspect, and M computing nodes coupled to the load balancing engine. In the distributed computing system provided in this embodiment, the load balancing engine is responsible for computing a load balancing policy, and clients separately perform service calling based on the load balancing policy, in other words, computing and execution of the load balancing policy are separated. This avoids a problem in the centralized load balancing solution shown in FIG. 1 that system performance is constrained because a load balancer 12 has a difficulty in processing large-traffic service calling. In addition, when a developer uses a plurality of different language stacks, because service calling code in the clients can be consistent, there is no need to develop a plurality of versions of clients, and only different load balancing engines need to be developed for the different language stacks. If the distributed computing system needs to be upgraded subsequently, only the load balancing engines need to be updated. Therefore, development costs can be reduced, and upgrade obstruction can be reduced.

In a possible implementation, the distributed computing system further includes the client according to the second aspect.

In a possible implementation, the distributed computing system further includes a registration server, configured to: collect global service information of the M computing nodes, and send the global service information to the load balancing engine.

In a possible implementation, the distributed computing system further includes:
a monitoring module, configured to monitor load of the M computing nodes, to obtain global load information and send the global load information to the load balancing engine.

In a possible implementation, the distributed computing system further includes a management node, configured to: receive a second load balancing policy sent by the load balancing engine, and perform service adjustment on the M computing nodes based on the second load balancing policy.

According to a fourth aspect, an embodiment of the present invention further provides a load balancing method, applied to a distributed computing system, and including: obtaining global load information of the distributed computing system, where the global load information indicates respective load of M computing nodes in the distributed computing system; obtaining global service information of the distributed computing system, where the global service information indicates types of services provided by the M computing nodes, and M is a natural number greater than 1; performing load balancing computing for a first service type by using the global load information and the global service information, to generate a first load balancing policy corresponding to the first service type, where the first service type is at least one of the types of the services provided by the M computing nodes, and the first load balancing policy indicates distribution information of a service message corresponding to the first service type; and releasing the first load balancing policy to a client. In the method provided in this embodiment, the load balancing engine is responsible for computing a load balancing policy, and clients separately perform service calling based on the load balancing policy, in other words, computing and execution of the load balancing policy are separated. This avoids a problem that system performance is constrained because there is a difficulty in processing large-traffic service calling. In addition, when a developer uses a plurality of different language stacks, there is no need to develop a plurality of versions of clients, and only different load balancing engines need to be developed for the different language stacks. In a subsequent upgrade, only the load balancing engines need to be updated. Therefore, development costs can be reduced, and upgrade obstruction can be reduced.

In a possible implementation, the method further includes: obtaining a service calling relationship between the M computing nodes; and the step of performing load balancing computing for a first service type by using the global load information and the global service information, to generate a first load balancing policy corresponding to the first service type includes: performing load balancing computing for the first service type by using the global load information, the global service information, and the service calling relationship, to generate the first load balancing policy.

In a possible implementation, the step of performing load balancing computing for the first service type by using the global load information, the global service information, and the service calling relationship, to generate the first load balancing policy includes: determining, from the M computing nodes based on the global service information, a target computing node that provides a service of the first service type; determining, from the M computing nodes based on the service calling relationship, a related computing node that has a calling relationship with the service that is of the first service type and that is provided by the target computing node; and determining, based on the global load information, load of the target computing node and the related computing node, and performing load balancing computing, to generate the first load balancing policy.

In a possible implementation, the method further includes: performing load balancing computing based on a preset service delay and by using the global load information, the global service information, and the service calling relationship, to generate a second load balancing policy, where the second load balancing policy is used to instruct the M computing nodes to perform service adjustment; and releasing the second load balancing policy to the M computing nodes.

In a possible implementation, the second load balancing policy instructs to adjust a service message distribution ratio between at least two computing nodes that have a service calling relationship.

In a possible implementation, the second load balancing policy instructs to adjust a service location between computing nodes that have a service calling relationship.

In a possible implementation, the second load balancing policy instructs to add or delete a service between computing nodes that have a service calling relationship.

According to a fifth aspect, an embodiment of the present invention further provides a load balancing method, applied to a client in a distributed computing system. The method includes: obtaining and caching a first load balancing policy released by a load balancing engine, where the first load balancing policy indicates distribution information of a service message of a first service type; receiving a first service request; querying the cached first load balancing policy; if the cached first load balancing policy matches the first service request, determining, from M computing nodes based on the distribution information indicated by the first load balancing policy, a target computing node matching the first service request; and sending, to the target computing node based on the distribution information indicated by the first load balancing policy, a service message corresponding to the first service request.

According to a sixth aspect, an embodiment of the present invention further provides a load balancing method, applied to a computing node or a management node in a distributed computing system. The method includes: receiving a second load balancing policy sent by a load balancing engine; and performing service adjustment on the computing node based on the second load balancing policy.

## BRIEF DESCRIPTION OF DRAWINGS

To describe the technical solutions in the embodiments of the present invention or in the prior art more clearly, the following briefly describes the accompanying drawings required for describing the embodiments or the prior art.

FIG. 1 is a schematic diagram of a centralized load balancing solution in the prior art;
FIG. 2 is a schematic diagram of another load balancing solution in the prior art;
FIG. 3 is an architectural diagram of a distributed computing system according to an embodiment of the present invention;
FIG. 4 is a schematic structural diagram of apparatuses in a distributed computing system shown in FIG. 3.
FIG. 5 is a schematic diagram of an inter-service calling relationship according to an embodiment of the present invention;
FIG. 6 is a schematic diagram of performing load balancing on computing nodes that have a service calling relationship according to an embodiment of the present invention;
FIG. 7a and FIG. 7b are schematic diagrams of adjusting a service message distribution ratio according to an embodiment of the present invention;

FIG. 8a and FIG. 8b are schematic diagrams of adjusting a service location according to an embodiment of the present invention;

FIG. 9a, FIG. 9b, and FIG. 9c are schematic diagrams of adding a service according to an embodiment of the present invention;

FIG. 10 is a schematic apparatus diagram of a load balancing engine according to an embodiment of the present invention;

FIG. 11 is a schematic apparatus diagram of a client according to an embodiment of the present invention;

FIG. 12 is a schematic flowchart of a load balancing method applied to a load balancing engine according to an embodiment of the present invention;

FIG. 13 is a schematic flowchart of a load balancing method applied to a client according to an embodiment of the present invention; and

FIG. 14 is a schematic flowchart of a load balancing method applied to a computing node (or a management node) according to an embodiment of the present invention.

## DESCRIPTION OF EMBODIMENTS

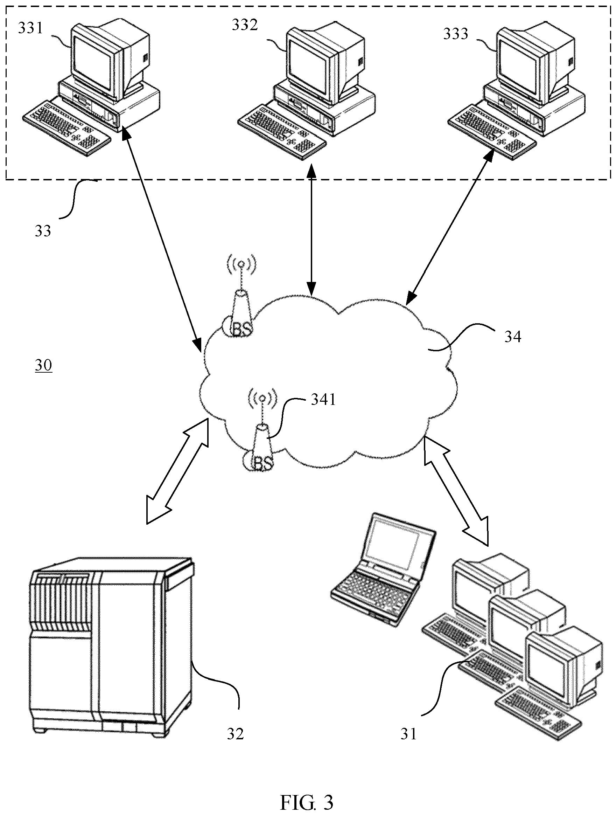

An embodiment of the present invention provides an architectural diagram of a distributed computing system. As shown in FIG. 3, the distributed computing system 30 may include: a client 31, a load balancing engine 32, and a service provider 33 including M computing nodes. The client 31, the load balancing engine 32, and the computing nodes in the service provider 33 communicate with each other by using a network 34. M is an integer greater than 1. In this embodiment, the network 34 may be a wired network, a wireless network, a local area network (LAN), a wide area network (WAN), a mobile communications network, or the like. For example, the client 31 may access the network 34 by using an access point (AP) 341, to communicate with the load balancing engine 32 or any computing node in the service provider 33.

It should be noted that for brevity, only three computing nodes are shown in FIG. 3: a computing node 331, a computing node 332, and a computing node 333. In actual application, a quantity of computing nodes may be determined based on a computing resource requirement of the distributed computing system, and is not limited to 3. In addition, in the distributed computing system, computing nodes are usually deployed in a clustered mode, in other words, all the computing nodes in the distributed computing system may be grouped into a plurality of clusters, and the M computing nodes mentioned in this embodiment may be computing nodes in all the clusters, or may be computing nodes in one or more clusters thereof.

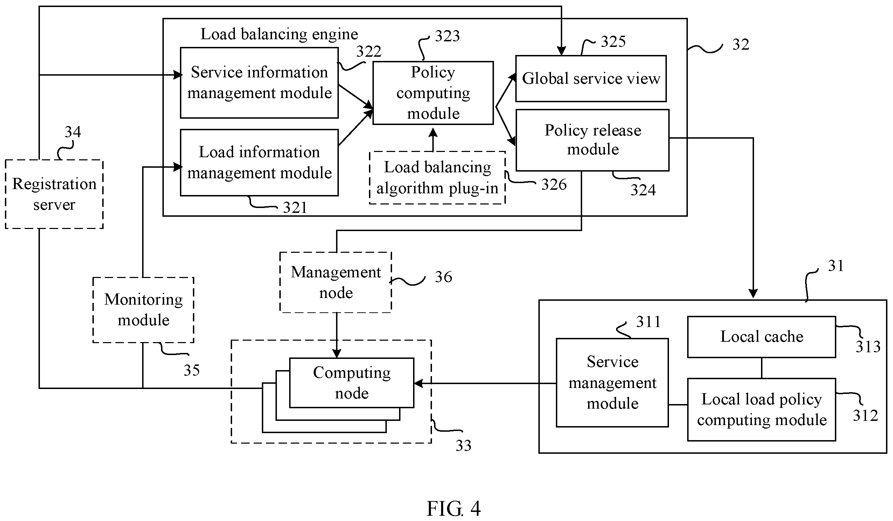

FIG. 4 further shows an internal structure of the apparatuses in the distributed computing system 30. The following further describes the distributed computing system 30 with reference to FIG. 4.

As shown in FIG. 4, the load balancing engine 32 may include a load information management module 321, a service information management module 322, a policy computing module 323, and a policy release module 324.

The load information management module 321 is configured to obtain global load information of the distributed computing system 30, where the global load information indicates respective load of the M computing nodes in the service provider 33.

The service information management module 322 is configured to obtain global service information, where the global service information indicates types of services provided by the M computing nodes, and each computing node may provide at least one type of service. A person skilled in the art should know that, in a distributed computing system, a computing node may be a personal computer, a workstation, a server, or another type of physical machine, or may be a virtual machine. A service on the computing node is usually run on the physical machine or the virtual machine in a form of a process. Therefore, one computing node may usually provide a plurality of services.

The policy computing module 323 is configured to perform load balancing computing for a first service type by using the global load information and the global service information, to obtain a first load balancing policy corresponding to the first service type. The first service type is at least one of the types of the services provided by the M computing nodes. The first load balancing policy indicates distribution information of a service message corresponding to the first service type in the M computing nodes. The distribution information includes a distribution object, or the distribution information includes a distribution object and a distribution ratio. For example, in an application scenario, if all of the computing node 331, the computing node 332, and the computing node 333 provide services of the first service type, and the policy computing module 323 learns, based on the global load information, that the computing node 331 and the computing node 332 have excessively high load, the first load balancing policy may be generated, to instruct to use the computing node 333 as a distribution object of the service message of the first service type. In another application scenario, likewise, assuming that all of the computing node 331, the computing node 332, and the computing node 333 provide services of the first service type, and the policy computing module 323 learns, based on the global load information, that the computing node 331 has excessively high load and the computing node 332 and the computing node 333 each may provide a part of a processing capability, the first load balancing policy may be generated, to instruct to use the computing node 332 and the computing node 333 as distribution objects of the service message of the first service type. In addition, the first load balancing policy may further indicate respective distribution ratios of the computing node 332 and the computing node 333. The policy release module 323 is configured to release the first load balancing policy to the client 31.

In this embodiment, the client 31 may include:

a local cache 313, configured to obtain and cache the first load balancing policy released by the load balancing engine 32, where the first load balancing policy indicates the distribution information of the service message of the first service type;

a service management module 311, configured to receive a first service request of a customer; and

a load policy computing module 312, configured to: respond to the first service request; determine, by querying the local cache 313, whether the first load balancing policy stored in the local cache 313 matches the first service request; and when the first load balancing policy stored in the local cache 313 matches the first service request, determine, from the M computing nodes based on the distribution information indicated by the first load balancing policy, a target computing node matching the first service request, where it should be known that, because the first load balancing policy is specified for the first service type, when a service corresponding to the first service request also belongs to the first service type, the load policy computing module 312 may consider that the first load balancing policy matches the first service request; otherwise, the load policy computing module 312 considers that the first load balancing policy does not match the first service request; and

the service management module 311 is further configured to send, to the target computing node based on the distribution information indicated by the first load balancing policy, a service message corresponding to the first service request, so that the target node responds to the first service request and provides the service.

Herein, a relationship between a service request and a service message is briefly described. In the distributed computing field, when requesting the service provider 33 to provide a service, the client 31 first needs to initiate a service request to the service provider 33, and after the service provider 33 responds to the request, sends a corresponding service message to the service provider 33. The service provider 33 performs corresponding computing processing, and finally feeds back a processing result to the client 31. In this way, one service is completed.

In the distributed computing system 30 provided in this embodiment, the load balancing engine 32 is responsible for computing a load balancing policy, and clients 31 separately perform service calling based on the load balancing policy, in other words, computing and execution of the load balancing policy are separated. This avoids a problem in the centralized load balancing solution shown in FIG. 1 that system performance is constrained because a load balancer 12 has a difficulty in processing large-traffic service calling. In addition, when a developer uses a plurality of different language stacks, because service calling code in the clients 31 can be consistent, there is no need to develop a plurality of versions of clients, and only different load balancing engines 32 need to be developed for the different language stacks. If the distributed computing system needs to be upgraded subsequently, only the load balancing engines 32 need to be updated. Therefore, development costs can be reduced, and upgrade obstruction can be reduced.

In this embodiment, when obtaining the global load information, the load balancing engine 32 may directly collect respective load information of the M computing nodes, and obtain the global load information by summarizing the collected load information. Alternatively, a monitoring module 35 such as a metric monitoring module that is configured to monitor working statuses of the M computing nodes may be disposed in the distributed computing system 30, and the global load information is obtained by using the monitoring module 35.

Further, the global load information collected from the M computing nodes includes but is not limited to the following types of load:

1. Resource usage information, for example, central processing unit (CPU) usage, memory usage, and network bandwidth usage.

2. Throughput information, for example, a quantity of service messages received by each service in a unit time, a quantity of service messages sent by each service in a unit time, and a quantity of sending objects.

3. Service delay information, for example, an average processing delay of a service message, an average waiting delay before processing of a service message, and an inter-service communication delay. It should be noted that a processing delay of a service message is related to the following factors: 1. a capability of physical hardware, such as a central processing unit (CPU) or an input/output (I/O) device, of a computing node on which a service is located; 2. whether another type of service on the computing node on which the service is located occupies resources such as the physical hardware; 3. processing logic of the service, where more complex logic leads to a larger corresponding message processing delay. A person skilled in the art should know that a message processing delay related to processing logic may be determined by sampling within a specific time period. A communication delay of the service message is related to the following factors: 1. a network capability of the computing node on which the service is located, for example, whether network bandwidth is 1 GB or 10 GB; 2. whether a network of the computing node on which the service is located is preempted by another service; 3. a communication distance between two services, for example, the communication delay is smallest if the two services are on a same computing node; the communication delay is larger in communication across computing nodes; and the communication delay is largest in communication across data centers.

4. Available resource information, for example, an availability status of physical resources of a computing node on which a service is located.

In this embodiment, the service information management module 322 may collect service information from the M computing nodes, and then summarize the collected service information to obtain the global service information. Alternatively, the global service information of the M computing nodes may be obtained by using a registration server 34 disposed in the distributed computing system 30. During initialization of each computing node, service information of the computing node is registered with the registration server 34. Further, the global service information may specifically include service group information and deployment information. The service group information indicates group information obtained after services deployed on each computing node are grouped based on a service type. The deployment information indicates a processing capability of a service deployed on each computing node, a total processing capability of each computing node, and the like. It should be noted that in computer terms, a service deployed on a computing node is usually referred to as a service instance, and is a specific runtime entity of a service on a computing node; and a service group is a set including several instances of a service type, and provides one service. In this embodiment, the policy computing module 323 may perform load balancing computing for the first service type by using the global load information and the global service information and based on a preset load balancing algorithm, to obtain the load balancing policy corresponding to the first service type. It should be noted that load balancing algorithms used by the policy computing module 323 may be usually classified into two types: a static load balancing algorithm and a dynamic load balancing algorithm.

The static load balancing algorithm may include:

1. Round robin: In each round robin, the M computing nodes are sequentially queried. When one of the computing nodes is overloaded or faulty, the computing node is removed from a sequential cyclic queue including the M computing nodes, and does not participate in next round robin, until the computing node recovers.

2. Ratio: A weighted value is set for each computing node, to represent a message allocation ratio. Based on this ratio, service messages sent by clients are allocated to computing nodes. When one of the computing nodes is overloaded or faulty, the computing node is removed from a queue including the M computing nodes, and does not participate in next service message allocation, until the computing node recovers.

3. Priority: The M computing nodes are grouped. Different priorities are set for groups. Then service messages of clients are allocated to a computing node group with a highest priority (in a same computing node group, service messages are allocated by using a round robin or ratio algorithm). When all computing nodes in the computing node group corresponding to the highest priority are overloaded or faulty, a service request is sent to a computing node group with a second highest priority.

The dynamic load balancing algorithm may include:

1. Least connection manner (Least Connection): Service messages are allocated to those computing nodes with fewest connections for processing. When a computing node with fewest connections is overloaded or faulty, the computing node is prevented from participating in next service message allocation, until the computing node recovers. A connection is a communications connection held between a client and a computing node for receiving or sending a service message, and a quantity of connections is in direct proportion to a throughput of the computing node.

2. Fastest mode (Fastest): Service messages are allocated to those computing nodes with a fastest response for processing. When a computing node with a fastest response is overloaded or faulty, the computing node is prevented from participating in next service message allocation, until the computing node recovers. A response time of each computing node includes a time for receiving and sending a service message, and a time for processing the service message. It should be known that a faster response indicates a shorter time for processing the service message by the computing node, or a shorter communication time between the computing node and a client.

3. Observed mode (Observed): With reference to a balance between a quantity of connections and a response time, a service message is allocated to a computing node with a best balance for processing. A person skilled in the art should know that the quantity of connections and the response time are contradictory. A larger quantity of connections means a larger throughput of service messages. Correspondingly, a time required for processing the service messages is longer. Therefore, the balance between the quantity of connections and the response time needs to be achieved, and more service messages need to be processed without significantly reducing the response time.

4. Predictive mode (Predictive): Current performance indicators of the M computing nodes are collected, and predictive analysis is performed. In a next time period, a service message is allocated to a computing node with best predicted performance for processing.

5. Dynamic performance-based allocation (DynamicRatio-APM): Performance parameters of the M computing nodes are collected and analyzed in real time, and service messages are dynamically allocated based on these performance parameters.

6. Dynamic computing node supplement (DynamicServer Act.): Some of the M computing nodes are set as an active computing node group, and others are used as backup computing nodes. When a quantity of computing nodes in the active computing node group is reduced because of overloading or a fault, a backup computing node is dynamically supplemented to the active computing node group.

It should be noted that the load balancing algorithm in this embodiment includes but is not limited to the foregoing algorithms. For example, the load balancing algorithm may be a combination of the foregoing algorithms, or may be an algorithm specified by a customer based on a user-defined rule, or various algorithms used in the prior art.

In this embodiment, a load balancing algorithm plug-in 326 may be used to import the load balancing algorithm defined by the customer into the policy computing module 323 and make the load balancing algorithm participate in computing of a load balancing policy. In this manner, an operator of the distributed computing system can more conveniently participate in maintenance, for example, update the load balancing algorithm by using the load balancing algorithm plug-in 326, to implement a system upgrade.

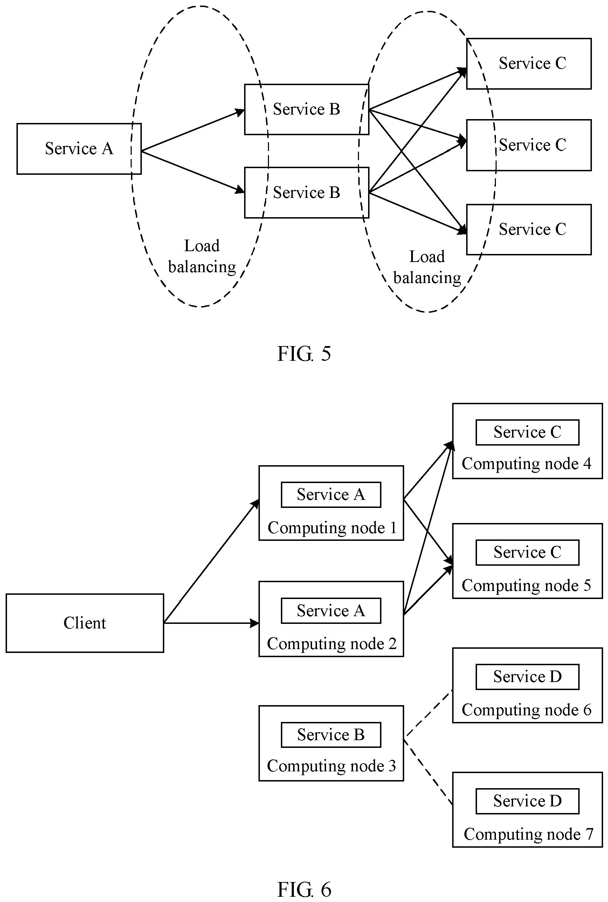

With development of distributed computing technologies, different services may call each other, in other words, a service is a service provider and also a service consumer. Especially, with fast development of distributed microservices, a depth of a microservice message chain is usually greater than 1. That a depth of a message chain is greater than 1 indicates that a service needs to call at least one another service. As shown in FIG. 5, when a service A is used as a service consumer, because the service A needs to call a service B, and the service B depends on a service C for providing a service, a depth of a message chain of the service A is 2. Further, in an existing distributed computing system, each service pays attention only to load of a next-level service. In other words, when the service A calls two services B, only load of the two services B and load of a computing node on which the two services B are located are considered in a load balancing policy of the service A, and load of three services C and load of a computing node on which the three services C are located are not considered. However, when a service B calls a service C, load balancing is independently performed once based on load of three services B. In other words, when a load balancing policy is computed in the current distributed computing system, overall load balancing from the service A to the services C is not considered.

Based on this, the distributed computing system 30 shown in FIG. 4 may further include a global service view 325, configured to obtain a service calling relationship between the M computing nodes. It should be noted that the service A, the services B, and the services C shown in FIG. 5 may be provided by a same computing node, or may be respectively provided by different computing nodes. Therefore, the service calling relationship obtained by the global service view 325 includes both a calling relationship between different services on a same computing node and a service calling relationship between different computing nodes. In addition, that the service A calls the services B means that the service A depends on some services provided by the services B to provide a complete service.

Correspondingly, the policy computing module 323 may be specifically configured to perform load balancing computing for the first service type by using the global load information, the global service information, and the service calling relationship, to generate the first load balancing policy.

In a possible implementation, the policy computing module 323 may be specifically configured to:

determine, from the M computing nodes based on the global service information, a target computing node providing a service of the first service type, where there may be one or more target computing nodes;
determine, from the M computing nodes based on the service calling relationship, a related computing node that has a calling relationship with the service that is of the first service type and that is provided by the target computing node, where it should be noted that the target computing node and the related computing node mentioned herein are merely used for ease of expression, and it should be known that both the target computing node and the related computing node are computing nodes, in the M computing nodes, that provide services corresponding to the first service type; and
determine, based on the global load information, load of the target computing node and the related computing node, and perform load balancing computing based on a preset load balancing algorithm, to generate the first load balancing policy, where for the load balancing algorithm, refer to the descriptions about the static load balancing algorithm and the dynamic load balancing algorithm, and details are not described herein again.

In this embodiment, with reference to FIG. 6, assuming that the service of the first service type is a service A, the policy computing module 323 in the load balancing engine 32 determines a computing node 1 and a computing node 2 as target computing nodes, where each of the computing node 1 and the computing node 2 provides the service A. In addition, there are calling relationships between services C provided by a computing node 4 and a computing node 5, and both services A provided by the computing node 1 and the computing node 2. Therefore, the policy computing module 323 may further determine, based on the obtained service calling relationship, the computing node 4 and the computing node 5 as related computing nodes. Next, the policy computing module 323 may obtain, based on the global load information, respective load of the target computing nodes and the related computing nodes (namely, the computing node 1, the computing node 2, the computing node 4, and the computing node 5), and then generate the first load balancing policy through load balancing computing. Subsequently, when the client 31 initiates a service request for the service A, the load balancing engine 32 may respond to the service request and determine, based on the first load balancing policy, distribution information of a service message corresponding to the service request.

It should be noted that in this embodiment, although only how to compute the first load balancing policy matching the first service type is described, a person skilled in the art should know that a distributed computing system usually provides services of more than one service type. In actual application, a load balancing engine may alternatively generate a corresponding load balancing policy for each service type provided by a distributed computing system, to support scheduling of service messages of different service types that come from different clients. For a method for generating a load balancing policy corresponding to another service type, refer to the method for generating the first load balancing policy. Details are not described herein again.

To better describe the technical solutions of the present invention, the following describes computing of a load balancing policy by using an example in which the observed mode is used as a load balancing algorithm.

It is assumed that, at a current throughput level, a message flow that needs to be scheduled in the distributed computing system 30 includes n service messages, as shown in a formula (1):

$$\sigma = \{\sigma_1, \sigma_2, ..\sigma_i, ..., \sigma_n\} \tag{1}$$

where $\sigma$ indicates a set of the n service messages, namely, the message flow; $\sigma_i$ indicates an $i^{th}$ service message, both i and n are natural numbers, and $1 \le i \le n$. Message chains of the n service messages are shown in a formula (2):

$$S = \{(S_i = \{S_i^{\,1}, ..., S_i^{\,k}\}) \mid \forall \sigma_i \in \sigma\} \tag{2}$$

where $S$ indicates a set of the message chains of the n service messages; $S_i$ indicates a message chain of the $i^{th}$ service message; $S_i^{\,ki}$ indicates a $k^{th}$ service in the message chain of the $i^{th}$ service message, and k is a natural number; a message chain is a chain formed by all services that need to be called for processing any service message in the distributed computing system; and the message chain may be determined based on the service calling relationship obtained by the global service view 325.

$$t(S_i) = \sum_{j=1}^{k} t(S_i^{\,j}) + \sum_{j=1}^{k-1} \lambda(S_i^{\,j}, S_i^{\,j+1}) \tag{3}$$

where, $t(S_i)$ indicates a total time required for the message chain of the $i^{th}$ service message, namely, a service delay; $\sum_{j=1}^{k} t(S_i^{\,j})$ indicates a processing delay required for the message chain of the $i^{th}$ service message; $\sum_{j=1}^{k-1} \lambda(S_i^{\,j}, S_i^{\,j+1})$ indicates a communication delay required for the message chain of the $i^{th}$ service message; and both the processing delay and the communication delay may be determined based on the global load information obtained by the load information management module 321.

$$\bar{t} = \frac{1}{n} \sum_{i=1}^{n} t(S_i) \tag{4}$$

As shown in the formula (4), $t$ indicates an average value of service delays of the message chains of the n service messages.

Based on the foregoing formula, a target function for evaluating a throughput and a response time may be obtained, as shown in a formula (5):

$$\min \Phi(S) = \min \frac{1}{n} \sum (t(S_i) - \bar{t})^2 \qquad (5)$$

where when a value of $\Phi(S)$ is smallest, it indicates that a balance between the throughput and the response time is best.

In this embodiment, further, the policy computing module 323 may be further configured to perform load balancing computing based on a preset service delay and by using the global load information and the global service information, to generate a second load balancing policy, where the second load balancing policy is a policy for instructing to perform service adjustment on the M computing nodes; and correspondingly, the policy release module 324 may be further configured to release the second load balancing policy to the M computing nodes. It should be noted that, when a node (such as a computing node A) provides a service for another node (such as a computing node B or a client), a service delay is a time spent in a whole procedure in which the node responds to a service request, receives a service message, processes the service message, and returns a processed service message, and the service delay may also be referred to as an end-to-end delay.

In this embodiment, the service delay may be specifically set based on delay tolerance of different services. For example, for a low-delay service, the service delay may be set according to a principle of a minimum end-to-end delay; for a high-delay service, the service delay may be set based on both overall performance of the distributed computing system and delay tolerance of the high-delay service. No specific limitation is imposed herein.

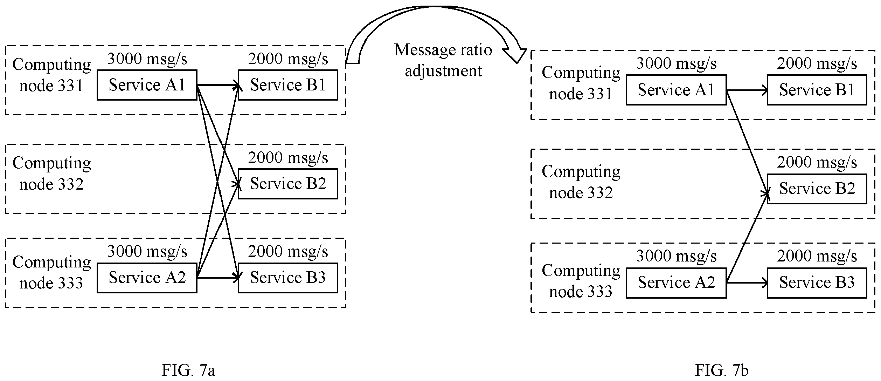

In a possible implementation, the second load balancing policy may instruct to adjust a service message distribution ratio between at least two computing nodes that have a service calling relationship. The following provides further descriptions with reference to FIG. 7a and FIG. 7b.

It is assumed that a current service calling relationship and message distribution ratio of the distributed computing system 30 are shown in FIG. 7a. A service A1 and a service A2 may be two different types of services, or may be two services of a same type. A service B1, a service B2, and a service B3 are services of a same type. There are calling relationships between a service A1 on a computing node 331 and a service B1 on the computing node 331, between the service A1 on the computing node 331 and a service B2 on a computing node 332, and between the service A1 on the computing node 331 and a service B3 on a computing node 333. There are calling relationships between a service A2 on the computing node 333 and the service B1 on the computing node 331, between the service A2 on the computing node 333 and the service B2 on the computing node 332, and between the service A2 on the computing node 333 and the service B3 on the computing node 333. In addition, each of the service A1 and the service A2 may send 3000 messages per second (3000 msg/s) to the service B1, the service B2, and the service B3. The 3000 messages are evenly allocated to the service B1, the service B2, and the service B3. Processing capabilities of all of the service B1, the service B2, and the service B3 are 2000 messages per second (2000 msg/s). In this scenario, regardless of whether messages are sent from the service A1 to the service B2 and the service B3 or messages are sent from the service A2 to the service B1 and the service B2, cross-node communication needs to be performed. In other words, a total of 4000 messages need to be sent in a cross-node communication manner. It should be known that a communication delay between services in a same computing node is much less than a cross-node communication delay. Therefore, a relatively large delay is caused if messages are sent based on the message distribution ratio shown in FIG. 7a, thereby affecting performance of the distributed computing system.

In this embodiment, the policy computing module may generate the second load balancing policy based on the preset service delay, to instruct to adjust a service message distribution ratio of the computing node 331, the computing node 332, and the computing node 333. As shown in FIG. 7b, based on the second load balancing policy, the service A1 may be instructed to send 2000 messages to the service B1 located in a same computing node, and send 1000 messages to the service B2 on the computing node 332. Similarly, the service A2 may be instructed to send 2000 messages to the service B3 located in a same computing node, and send 1000 messages to the service B2 on the computing node 332. After such adjustment, only 2000 messages need to be sent in a cross-node communication manner. In addition, cross-node communication in FIG. 7b needs to be performed only across one computing node, and that in FIG. 7a needs to be performed across two computing nodes. It can be easily learned that, after the message distribution ratio is adjusted according to a principle of a minimum service delay, unnecessary cross-node communication is reduced, a delay of the entire distributed computing system is reduced, and therefore performance of the distributed computing system is improved.

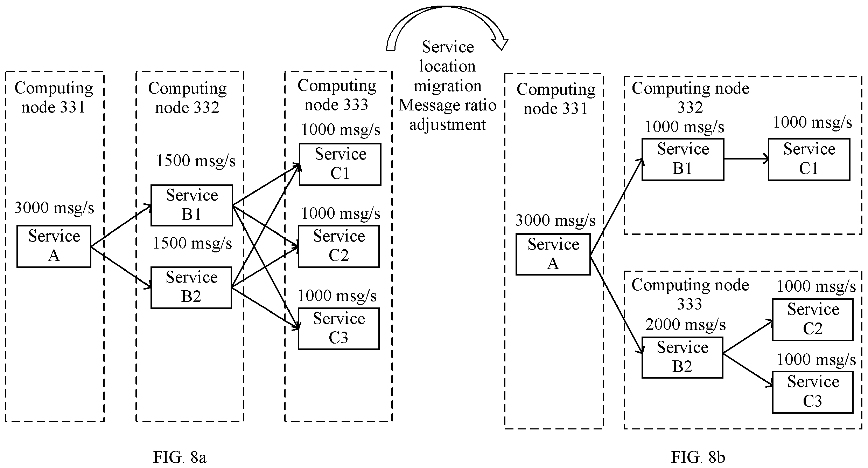

In another possible implementation, the second load balancing policy may instruct to adjust a service location between computing nodes that have a service calling relationship. The following provides further descriptions with reference to FIG. 8a and FIG. 8b.

It is assumed that a current service calling relationship and message distribution ratio of the distributed computing system are shown in FIG. 8a. A service B1 and a service B2 are two services of a same type. A service C1, a service C2, and a service C3 are services of another type. There are calling relationships between a service A on a computing node 331 and a service B1 and a service B2 that are on a computing node 332. There are calling relationships between the service B1 and a service C1, a service C2, and a service C3 that are on a computing node 333, and between the service B2 and the service C1, the service C2, and the service C3 that are on the computing node 333. In the prior art, each service can sense load information only of a service to be called next by the service. To be specific, the service A can sense load only of the service B1 and the service B2 (namely, the computing node 332). In an existing load balancing policy, even allocation is a best load balancing policy. Therefore, 3000 messages sent by the service A per second are evenly distributed to the service B1 and the service B2. Similarly, the service B1 and the service B2 each evenly send respective 1500 messages to the service C1, the service C2, and the service C3.

However, in this embodiment of the present invention, because a service calling relationship between different computing nodes is considered, during computing of a load balancing policy, the load balancing engine may compute the second load balancing policy in combination with load of the computing node 332 and the computing node 333 and the preset service delay, to instruct to adjust locations of the services deployed on the computing node 332 and the computing node 333. As shown in FIG. 8b, the second load balancing policy may instruct to deploy the service C1, originally deployed on the computing node 333, to the computing node 332; and deploy the service B2, originally deployed on the computing node 332, to the computing node 333. In addition, processing capabilities of the service B1 and the service B2 may reach 2000 msg/s, and processing capabilities of the service C1, the service C2, and the service C3 are 1000 msg/s. Therefore, the service A may distribute 2000 messages to the service B2, and the service B2 evenly distributes the messages to the service C2 and the service C3. In addition, the service A distributes the remaining 1000 messages to the service B1, and the service B1 distributes the messages to the service C1. It can be easily learned from FIG. 8a that cross-node communication is required for a total of 6000 messages. However, in FIG. 8b, after service locations are adjusted based on the second load balancing policy, cross-node communication is required only for 3000 messages, thereby significantly reducing a communication delay of the distributed computing system.

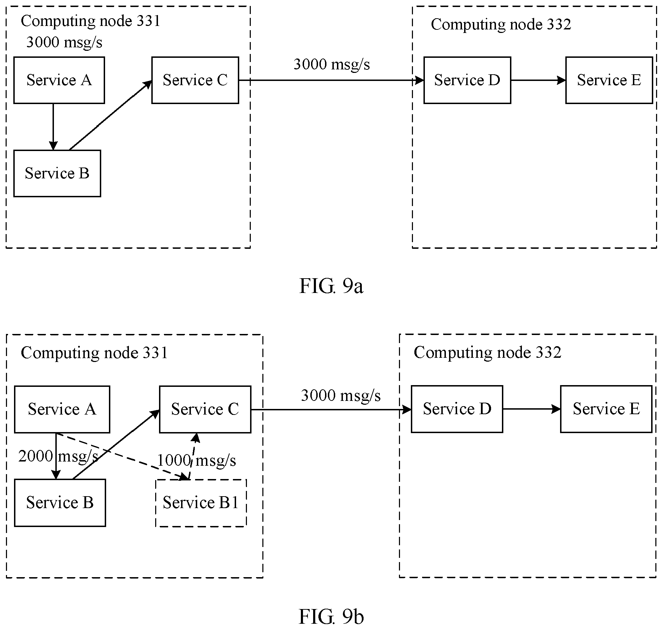

In still another possible implementation, the second load balancing policy may further instruct to add or delete a service between computing nodes that have a service calling relationship. The following provides further descriptions with reference to FIG. 9a to FIG. 9c.

As shown in FIG. 9a, a message sending path of a service A is: service A → service B → service C → service D → service E. When the load balancing engine finds, based on the collected global load information, that load of the service B is excessively high, and a computing node 331 and a computing node 332 are not fully loaded, the load balancing engine may instruct to add, in the message sending path to perform load sharing, a service B1 of a same type as the service B. Further, the load balancing engine may determine, based on the global service information and the service calling relationship, whether the service B1 is to be added to the computing node 331 or the computing node 332. Considering a principle of a minimum service delay, if the service B1 is to be added to the computing node 332, cross-node communication is required when a message is sent from the service A on the computing node to the service B1 on the computing node 332 and when a message is sent from the service B1 to the service C on the computing node 331. This does not help reduce a communication delay of the distributed computing system. Therefore, the load balancing engine may determine that adding the service B1 to the computing node 331 is a best choice. Correspondingly, as shown in FIG. 9b, the load balancing engine may instruct, by using the second load balancing policy, to add the service B1 to the computing node 331 for load sharing, to avoid additional cross-node communication.

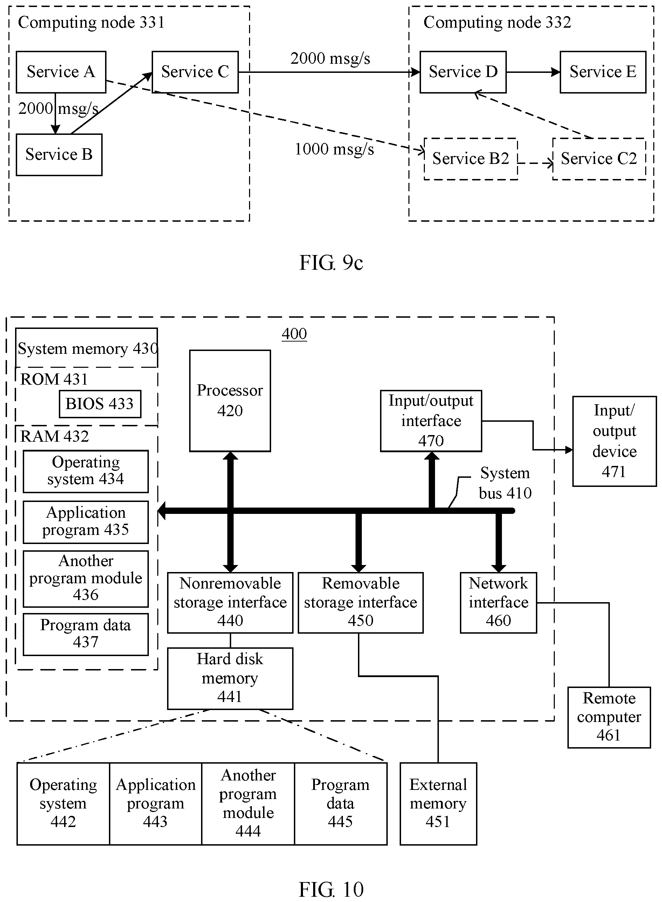

Further, as shown in FIG. 9c, if the load balancing engine finds, based on the global load information, that the load of the service B is excessively high, the computing node 331 is fully loaded, and the computing node 332 is not fully loaded, the load balancing engine may instruct to add, to the computing node 332 to share load of a service D, a service B2 of a same type as the service B. In addition, a service C2 of a same type as the service C is added. Compared with FIG. 9b, likewise, no additional cross-node communication is added. However, because the service C2 is added to the computing node 332, an inner-node communication delay slightly increases.

With development of distributed computing systems, when computing nodes are deployed in a clustered manner, some advanced system frameworks are introduced, such as Hadoop, Mesos, and Marathon frameworks. Correspondingly, as shown in FIG. 4, a management node 36 (for example, Mesos Master) may be further introduced into the distributed computing system 30, and computing nodes are managed by the management node. Therefore, the policy release module 324 may release the second load balancing policy to the management node 36, and the management node 36 instructs the M computing nodes to perform service adjustment. Certainly, a management function of the management node 36 may be distributed to the computing nodes, and the computing nodes perform service adjustment based on the second load balancing policy.

In the distributed computing system 30 shown in FIG. 4, load of each computing node changes in real time, and services deployed on the computing nodes may be adjusted based on the second load balancing policy. Therefore, the global load information, the global service information, and the service calling relationship are all periodically obtained.

Correspondingly, the policy computing module 323 is also configured to periodically compute the first load balancing policy or the second load balancing policy, and the policy release module 324 periodically releases the first load balancing policy or the second load balancing policy. Correspondingly, the client 31 may also periodically obtain the first load balancing policy released by the load balancing engine 32, and the computing node (or the management node) may also periodically obtain the second load balancing policy released by the load balancing engine 32.

In this embodiment, the modules in the load balancing engine 32 may be implemented in a form of hardware, such as an integrated circuit (IC), a digital signal processor (DSP), a field programmable gate array (FPGA), and a digital circuit. Similarly, the modules in the client 31 may also be implemented by using the foregoing hardware.

In another embodiment, a load balancing engine may be implemented by using a generic computing device shown in FIG. 10. In FIG. 10, components in a load balancing engine 400 may include but are not limited to a system bus 410, a processor 420, and a system memory 430.

The processor 420 is coupled, by using the system bus 410, with various system components including the system memory 430. The system bus 410 may include an industrial standard architecture (ISA) bus, a micro channel architecture (MCA) bus, an extended ISA (EISA) bus, a Video Electronics Standards Association (VESA) local area bus, and a peripheral component interconnect (PCI) bus.

The system memory 430 includes a volatile memory and a nonvolatile memory, such as a read-only memory (ROM) 431 and a random access memory (RAM) 432. A basic input/output system (BIOS) 433 is usually stored in the ROM 431. The BIOS 433 includes a basic routine program, and helps various components to perform information transmission by using the system bus 410. The RAM 432 usually includes data and/or a program module, and may be instantly accessed and/or immediately operated by the processor 420. The data or the program module stored in the RAM 432 includes but is not limited to an operating system 434, an application program 435, another program module 436, program data 437, and the like. The load balancing engine 400 may further include other removable/nonremovable and volatile/nonvolatile storage media, for example, a hard disk drive 441 that may be a nonremovable and nonvolatile read/write magnetic medium, and an external memory 451 that may be any removable and nonvolatile external memory, such as an optical disc, a magnetic disk, a flash memory, or a removable hard disk. The hard disk drive 441 is usually connected to the system bus 410 by using a nonremovable storage interface 440, and the external memory is usually connected to the system bus 410 by using a removable storage interface 450.

The foregoing storage media provide storage space for a readable instruction, a data structure, a program module, and other data of the load balancing engine 400. For example, as described, the hard disk drive 441 is configured to store an operating system 442, an application program 443, another program module 444, and program data 445. It should be noted that these components may be the same as or may be different from the operating system 434, the application program 435, the another program module 436, and the program data 437 stored in the system memory 430.

In this embodiment, functions of the modules in the load balancing engine 32 shown in the foregoing embodiments and FIG. 4 may be implemented by the processor 420 by reading and executing code or a readable instruction stored in the foregoing storage media.

In addition, a customer may enter a command and information in the load balancing engine 400 by using various input/output (I/O) devices 471. The I/O device 471 usually communicates with the processor 420 by using an input/output interface 470. For example, when the customer needs to use a user-defined load balancing algorithm, the customer may provide the user-defined load balancing algorithm for the processor 420 by using the I/O device 471, so that the processor 420 computes a load balancing policy based on the user-defined load balancing algorithm.

The load balancing engine 400 may include a network interface 460. The processor 420 communicates with a remote computer 461 (namely, the computing node in the distributed computing system 30) by using the network interface 460, to obtain the global load information, the global service information, and the service calling relationship that are described in the foregoing embodiments; computes a load balancing policy (the first load balancing policy or the second load balancing policy) based on the information and by executing an instruction in the storage media; and then releases the load balancing policy obtained by computing to a client or a computing node.

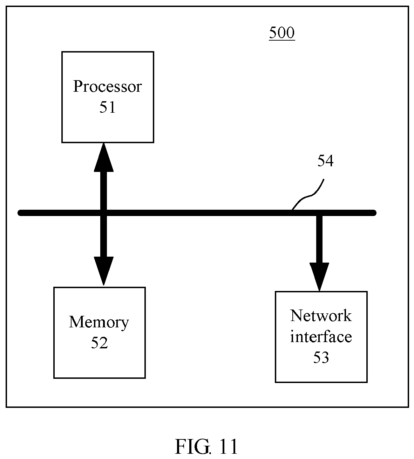

In another embodiment, a client may be implemented by using a structure shown in FIG. 11. As shown in FIG. 11, the client 500 may include a processor 51, a memory 52, and a network interface 53. The processor 51, the memory 52, and the network interface 53 communicate with each other by using a system bus 54.

The network interface 53 is configured to obtain a first load balancing policy released by a load balancing engine, and cache the first load balancing policy in the memory 52, where the first load balancing policy indicates distribution information of a service message of a first service type.

The processor 51 is configured to: receive a first service request, and query the memory 52 to determine whether the first load balancing policy stored in the memory 52 matches the first service request.

The processor 51 is further configured to: when the first load balancing policy stored in the memory 52 matches the first service request, determine, from M computing nodes based on the distribution information indicated by the first load balancing policy, a target computing node matching the first service request; and send, to the target computing node by using the network interface 53 and based on the distribution information indicated by the first load balancing policy, a service message corresponding to the first service request.

It should be noted that, when performing a corresponding function, the processor 51 performs the function based on an instruction stored in the memory 52 or another storage apparatus. Further, the client shown in FIG. 11 is in a generic computer structure, and the foregoing computing node may also be a physical machine in the generic computer structure. Therefore, for a structure of the computing node, refer to the structure shown in FIG. 11. An only difference is that processors perform different functions. Details are not described herein again. In addition, various services provided by the computing node are various processes running on the processor.

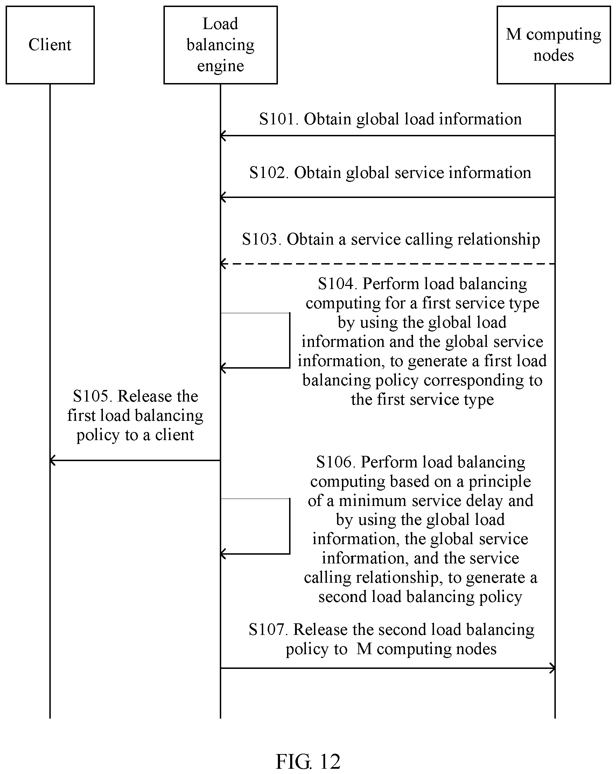

As shown in FIG. 12, an embodiment of the present invention further provides a load balancing method, applied to the distributed computing system shown in FIG. 3 or FIG. 4. The method includes the following steps:

S101. Obtain global load information of the distributed computing system, where the global load information indicates respective load of M computing nodes in the distributed computing system.

S102. Obtain global service information of the distributed computing system, where the global service information indicates types of services provided by the M computing nodes, and M is a natural number greater than 1.

S104. Perform load balancing computing for a first service type by using the global load information and the global service information, to generate a first load balancing policy corresponding to the first service type, where the first service type is at least one of the types of the services provided by the M computing nodes, and the first load balancing policy indicates distribution information of a service message corresponding to the first service type.

S105. Release the first load balancing policy to a client.

The method may further include the following step:

S103. Obtain a service calling relationship between the M computing nodes.

Step S104 may include:

performing load balancing computing for the first service type by using the global load information, the global service information, and the service calling relationship, to generate the first load balancing policy.

More specifically, step S104 may include:

determining, from the M computing nodes based on the global service information, a target computing node that provides a service of the first service type;

determining, from the M computing nodes based on the service calling relationship, a related computing node that has a calling relationship with the service that is of the first service type and that is provided by the target computing node; and

determining, based on the global load information, load of the target computing node and the related computing node, and performing load balancing computing, to generate the first load balancing policy.

The method may further include the following steps:

S106. Perform load balancing computing based on a preset service delay and by using the global load information, the global service information, and the service calling relationship, to generate a second load balancing policy, where the second load balancing policy is used to instruct the M computing nodes to perform service adjustment. For example, the second load balancing policy may instruct to adjust a service message distribution ratio between at least two computing nodes that have a service calling relationship, or the second load balancing policy may instruct to adjust a service location between computing nodes that have a service calling relationship, or the second load balancing policy may instruct to add or remove a service between computing nodes that have a service calling relationship.

S107. Release the second load balancing policy to the M computing nodes.

It should be noted that the foregoing load balancing method is implemented by a load balancing engine, and a sequence of the steps is not limited. The method is corresponding to the foregoing apparatus embodiment of the load balancing engine. Therefore, for related details about the method, refer to the foregoing apparatus embodiment of the load balancing engine. Details are not described herein again.

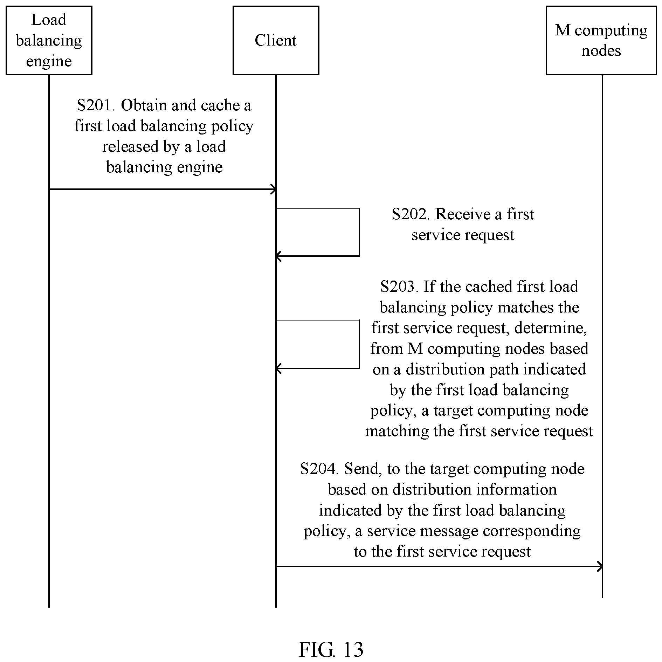

Further, as shown in FIG. 13, an embodiment further provides a load balancing method, applied to the client in the distributed computing system shown in FIG. 3 or FIG. 4. The method includes the following steps:

S201. Obtain and cache a first load balancing policy released by a load balancing engine, where the first load balancing policy indicates distribution information of a service message of a first service type.

S202. Receive a first service request.

S203. Query the cached first load balancing policy, and if the cached first load balancing policy matches the first service request, determine, from M computing nodes based on the distribution information indicated by the first load balancing policy, a target computing node matching the first service request.

S204. Send, to the target computing node based on the distribution information indicated by the first load balancing policy, a service message corresponding to the first service request.

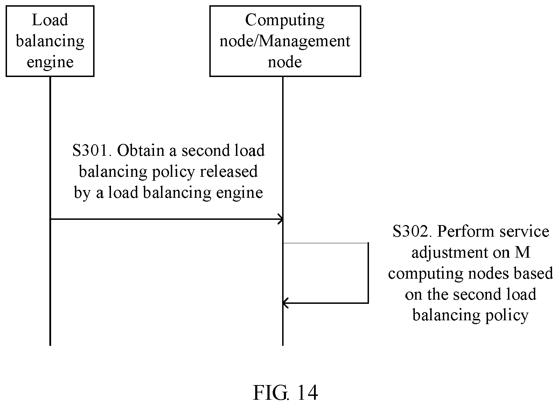

Further, as shown in FIG. 14, an embodiment further provides a load balancing method, applied to the computing node or the management node in the distributed computing system shown in FIG. 3 or FIG. 4. The method includes the following steps:

S301. Receive a second load balancing policy sent by a load balancing engine.

S302. Perform service adjustment on the computing node based on the second load balancing policy.

It should be understood that specific embodiments described herein are merely common embodiments of the present invention. Any modification, equivalent replacement, and improvement made without departing from the principle of the present invention shall fall within the protection scope of the present invention.

**Claims**

1. A load balancing engine, applied to a distributed computing system, wherein the load balancing engine comprises:

a load information management module, configured to obtain global load information of the distributed computing system, wherein the global load information indicates respective load of M computing nodes in the distributed computing system;

a service information management module, configured to obtain global service information of the distributed computing system, wherein the global service information indicates types of services provided by the M computing nodes, and M is a natural number greater than 1;

a policy computing module, configured to perform load balancing computing for a first service type by using the global load information and the global service information, to generate a first load balancing policy corresponding to the first service type, wherein the first service type is at least one of the types of the services provided by the M computing nodes, and the first load balancing policy indicates distribution information of a service message corresponding to the first service type in the M computing nodes; and

a policy release module, configured to release the first load balancing policy to a client.

2. The load balancing engine according to claim 1, wherein the load balancing engine further comprises a global service view, configured to obtain a service calling relationship between the M computing nodes; and

the policy computing module is configured to perform load balancing computing for the first service type by using the global load information, the global service information, and the service calling relationship, to generate the first load balancing policy.

3. The load balancing engine according to claim 2, wherein the policy computing module is specifically configured to:

determine, from the M computing nodes based on the global service information, a target computing node that provides a service of the first service type;

determine, from the M computing nodes based on the service calling relationship, a related computing node that has a calling relationship with the service that is of the first service type and that is provided by the target computing node; and

determine, based on the global load information, load of the target computing node and the related computing node, and perform load balancing computing, to generate the first load balancing policy.

4. The load balancing engine according to claim 2, wherein the policy computing module is further configured to perform load balancing computing based on a preset service delay and by using the global load information, the global service information, and the service calling relationship, to generate a second load balancing policy, wherein the second load balancing policy is used to instruct the M computing nodes to perform service adjustment; and

the policy release module is further configured to release the second load balancing policy to the M computing nodes.

5. The load balancing engine according to claim 4, wherein the second load balancing policy instructs to adjust a service message distribution ratio between at least two computing nodes that have a service calling relationship.

6. The load balancing engine according to claim 4, wherein the second load balancing policy instructs to adjust a service location between computing nodes that have a service calling relationship.

7. The load balancing engine according to claim 4, wherein the second load balancing policy instructs to add or delete a service between computing nodes that have a service calling relationship.

8. The load balancing engine according to any one of claims 1 to 7, wherein all of the global load information, the global service information, and the service calling relationship are periodically obtained; and the policy computing module is configured to periodically compute the first load balancing policy or the second load balancing policy, and the policy release module is configured to periodically release the first load balancing policy or the second load balancing policy.

9. A client, applied to a distributed computing system, wherein the distributed computing system comprises a load balancing engine and M computing nodes, M is a natural number greater than 1, and the client comprises:

   a local cache, configured to obtain and cache a first load balancing policy released by the load balancing engine, wherein the first load balancing policy indicates distribution information of a service message of a first service type;
   a service management module, configured to receive a first service request; and
   a load policy computing module, configured to: query the local cache; and if the first load balancing policy stored in the local cache matches the first service request, determine, from the M computing nodes based on the distribution information indicated by the first load balancing policy, a target computing node matching the first service request, wherein
   the service management module is further configured to send, to the target computing node based on the distribution information indicated by the first load balancing policy, a service message corresponding to the first service request.

10. A distributed computing system, comprising the load balancing engine according to any one of claims 1 to 8, and M computing nodes coupled to the load balancing engine.

11. The distributed computing system according to claim 10, further comprising the client according to claim 9.

12. A load balancing method, applied to a distributed computing system, and comprising:

   obtaining global load information of the distributed computing system, wherein the global load information indicates respective load of M computing nodes in the distributed computing system;
   obtaining global service information of the distributed computing system, wherein the global service information indicates types of services provided by the M computing nodes, and M is a natural number greater than 1;
   performing load balancing computing for a first service type by using the global load information and the global service information, to generate a first load balancing policy corresponding to the first service type, wherein the first service type is at least one of the types of the services provided by the M computing nodes, and the first load balancing policy indicates distribution information of a service message corresponding to the first service type; and
   releasing the first load balancing policy to a client.

13. The load balancing method according to claim 12, wherein the method further comprises:

   obtaining a service calling relationship between the M computing nodes; and
   the step of performing load balancing computing for a first service type by using the global load information and the global service information, to generate a first load balancing policy corresponding to the first service type comprises:
   performing load balancing computing for the first service type by using the global load information, the global service information, and the service calling relationship, to generate the first load balancing policy.

14. The load balancing method according to claim 13, wherein the step of performing load balancing computing for the first service type by using the global load information, the global service information, and the service calling relationship, to generate the first load balancing policy comprises:

determining, from the M computing nodes based on the global service information, a target computing node that provides a service of the first service type;

determining, from the M computing nodes based on the service calling relationship, a related computing node that has a calling relationship with the service that is of the first service type that is provided by the target computing node; and

determining, based on the global load information, load of the target computing node and the related computing node, and performing load balancing computing, to generate the first load balancing policy.

15. The load balancing method according to claim 13 or 14, further comprising:

performing load balancing computing based on a preset service delay and by using the global load information, the global service information, and the service calling relationship, to generate a second load balancing policy, wherein the second load balancing policy is used to instruct the M computing nodes to perform service adjustment; and

releasing the second load balancing policy to the M computing nodes.


**Patentansprüche**

1. Lastausgleichsengine, die auf ein verteiltes Rechensystem angewendet wird, wobei die Lastausgleichsengine Folgendes umfasst:

ein Lastinformationenverwaltungsmodul, das konfiguriert ist, um globale Lastinformationen des verteilten Rechensystems zu erhalten, wobei die globalen Lastinformationen eine jeweilige Last von M Rechenknoten in dem verteilten Rechensystem angeben;

ein Dienstinformationenverwaltungsmodul, das konfiguriert ist, um globale Dienstinformationen des verteilten Rechensystems zu erhalten, wobei die globalen Dienstinformationen Arten von Diensten angeben, die durch die M Rechenknoten bereitgestellt werden, und M eine natürliche Zahl größer als 1 ist;

ein Richtlinienrechenmodul, das konfiguriert ist, um ein Lastausgleichsberechnen für eine erste Dienstart durch Verwenden der globalen Lastinformationen und der globalen Dienstinformationen durchzuführen, um eine erste Lastausgleichsrichtlinie zu erzeugen, die der ersten Dienstart entspricht, wobei die erste Dienstart wenigstens eine der Dienstarten ist, die durch die M Rechenknoten bereitgestellt werden, und die erste Lastausgleichsrichtlinie Verteilungsinformationen einer Dienstnachricht angibt, die der ersten Dienstart in den M Rechenknoten entspricht; und

ein Richtlinienfreigabemodul, das konfiguriert ist, um die erste Lastausgleichsrichtlinie an einen Client freizugeben.

2. Lastausgleichsengine nach Anspruch 1, wobei die Lastausgleichsengine ferner eine globale Dienstansicht umfasst, die konfiguriert ist, um eine Dienstaufrufbeziehung zwischen den M Rechenknoten zu erhalten; und

das Richtlinienrechenmodul konfiguriert ist, um das Lastausgleichsberechnen für die erste Dienstart durch Verwenden der globalen Lastinformationen, der globalen Dienstinformationen und der Dienstaufrufbeziehung durchzuführen, um die erste Lastausgleichsrichtlinie zu erzeugen.

3. Lastausgleichsengine nach Anspruch 2, wobei das Richtlinienrechenmodul speziell für Folgendes konfiguriert ist:

Bestimmen, aus den M Rechenknoten basierend auf den globalen Dienstinformationen, eines Zielrechenknotens, der einen Dienst der ersten Dienstart bereitstellt;

Bestimmen, aus den M Rechenknoten basierend auf der Dienstaufrufbeziehung, eines verwandten Rechenknotens, der eine Aufrufbeziehung zu dem Dienst aufweist, der von der ersten Dienstart ist und der durch den Zielrechenknoten bereitgestellt wird; und

Bestimmen, basierend auf den globalen Lastinformationen, einer Last des Zielrechenknotens und des verwandten Rechenknotens und Durchführen des Lastausgleichsberechnens, um die erste Lastausgleichsrichtlinie zu erzeugen.

4. Lastausgleichsengine nach Anspruch 2, wobei das Richtlinienrechenmodul ferner konfiguriert ist, um das Lastausgleichsberechnen basierend auf einer voreingestellten Dienstverzögerung und durch Verwenden der globalen Lastinformationen, der globalen Dienstinformationen und der Dienstaufrufbeziehung durchzuführen, um eine zweite Lastausgleichsrichtlinie zu erzeugen, wobei die zweite Lastausgleichsrichtlinie verwendet wird, um die M Rechenknoten anzuweisen, eine Dienstanpassung durchzuführen; und
das Richtlinienfreigabemodul ferner konfiguriert ist, um die zweite Lastausgleichsrichtlinie an die M Rechenknoten freizugeben.

5. Lastausgleichsengine nach Anspruch 4, wobei die zweite Lastausgleichsrichtlinie anweist, ein Dienstnachrichtenverteilungsverhältnis zwischen wenigstens zwei Rechenknoten anzupassen, die eine Dienstaufrufbeziehung aufweisen.

6. Lastausgleichsengine nach Anspruch 4, wobei die zweite Lastausgleichsrichtlinie anweist, einen Dienstort zwischen Rechenknoten anzupassen, die eine Dienstaufrufbeziehung aufweisen.

7. Lastausgleichsengine nach Anspruch 4, wobei die zweite Lastausgleichsrichtlinie anweist, einen Dienst zwischen Rechenknoten hinzuzufügen oder zu löschen, die eine Dienstaufrufbeziehung aufweisen.

8. Lastausgleichsengine nach einem der Ansprüche 1 bis 7, wobei die globalen Lastinformationen, die globalen Dienstinformationen und die Dienstaufrufbeziehung alle periodisch erhalten werden; und das Richtlinienrechenmodul konfiguriert ist, um die erste Lastausgleichsrichtlinie oder die zweite Lastausgleichsrichtlinie periodisch zu berechnen, und das Richtlinienfreigabemodul konfiguriert ist, um die erste Lastausgleichsrichtlinie oder die zweite Lastausgleichsrichtlinie periodisch freizugeben.

9. Client, der auf ein verteiltes Rechensystem angewendet wird, wobei das verteilte Rechensystem eine Lastausgleichsengine und M Rechenknoten umfasst, M eine natürliche Zahl größer als 1 ist und der Client Folgendes umfasst:

einen lokalen Cache, der konfiguriert ist, um eine erste Lastausgleichsrichtlinie zu erhalten und zu cachen, die durch die Lastausgleichsengine freigegeben wird, wobei die erste Lastausgleichsrichtlinie Verteilungsinformationen einer Dienstnachricht einer ersten Dienstart angibt;
ein Dienstverwaltungsmodul, das konfiguriert ist, um eine erste Dienstanforderung zu empfangen; und
ein Lastrichtlinienberechnungsmodul, das für Folgendes konfiguriert ist:

Abfragen des lokalen Cache; und falls die erste Lastausgleichsrichtlinie, die in dem lokalen Cache gespeichert wird, mit der ersten Dienstanforderung übereinstimmt, Bestimmen, aus den M Rechenknoten basierend auf den Verteilungsinformationen, die durch die erste Lastausgleichsrichtlinie angegeben werden, eines Zielrechenknotens, der mit der ersten Dienstanforderung übereinstimmt, wobei das Dienstverwaltungsmodul ferner konfiguriert ist, um basierend auf den Verteilungsinformationen, die durch die erste Lastausgleichsrichtlinie angegeben werden, eine Dienstnachricht an den Zielrechenknoten zu senden, die der ersten Dienstanforderung entspricht.

10. Verteiltes Rechensystem, das die Lastausgleichsengine nach einem der Ansprüche 1 bis 8 und M Rechenknoten umfasst, die mit der Lastausgleichsengine gekoppelt sind.

11. Verteiltes Rechensystem nach Anspruch 10, das ferner den Client nach Anspruch 9 umfasst.

12. Lastausgleichsverfahren, das auf ein verteiltes Rechensystem angewendet wird und Folgendes umfasst:

Erhalten globaler Lastinformationen des verteilten Rechensystems, wobei die globalen Lastinformationen die jeweilige Last von M Rechenknoten in dem verteilten Rechensystem angeben;
Erhalten globaler Dienstinformationen des verteilten Rechensystems, wobei die globalen Dienstinformationen Arten von Diensten angeben, die durch die M Rechenknoten bereitgestellt werden, und M eine natürliche Zahl größer als 1 ist;
Durchführen des Lastausgleichsberechnens für eine erste Dienstart durch Verwenden der globalen Lastinformationen und der globalen Dienstinformationen, um eine erste Lastausgleichsrichtlinie zu erzeugen, die der ersten Dienstart entspricht, wobei die erste Dienstart wenigstens eine der Dienstarten ist, die durch die M Rechenknoten bereitgestellt werden, und die erste Lastausgleichsrichtlinie Verteilungsinformationen einer Dienstnachricht angibt, die der ersten Dienstart entspricht; und
Freigeben der ersten Lastausgleichsrichtlinie an einen Client.

13. Lastausgleichsverfahren nach Anspruch 12, wobei das Verfahren ferner Folgendes umfasst:

Erhalten einer Dienstaufrufbeziehung zwischen den M Rechenknoten; und

wobei der Schritt des Durchführens des Lastausgleichsberechnens für eine erste Dienstart durch Verwenden der globalen Lastinformationen und der globalen Dienstinformationen, um eine erste Lastausgleichsrichtlinie zu erzeugen, die der ersten Dienstart entspricht, Folgendes umfasst:

Durchführen des Lastausgleichsberechnens für die erste Dienstart durch Verwenden der globalen Lastinformationen, der globalen Dienstinformationen und der Dienstaufrufbeziehung, um die erste Lastausgleichsrichtlinie zu erzeugen.

14. Lastausgleichsverfahren nach Anspruch 13, wobei der Schritt des Durchführens des Lastausgleichsberechnens für die erste Dienstart durch Verwenden der globalen Lastinformationen, der globalen Dienstinformationen und der Dienstaufrufbeziehung, um die erste Lastausgleichsrichtlinie zu erzeugen, Folgendes umfasst:

Bestimmen, aus den M Rechenknoten basierend auf den globalen Dienstinformationen, eines Zielrechenknotens, der einen Dienst der ersten Dienstart bereitstellt;

Bestimmen, aus den M Rechenknoten basierend auf der Dienstaufrufbeziehung, eines verwandten Rechenknotens, der eine Aufrufbeziehung zu dem Dienst aufweist, der von der ersten Dienstart ist, die durch den Zielrechenknoten bereitgestellt wird; und

Bestimmen, basierend auf den globalen Lastinformationen, der Last des Zielrechenknotens und des verwandten Rechenknotens und Durchführen des Lastausgleichsberechnens, um die erste Lastausgleichsrichtlinie zu erzeugen.

15. Lastausgleichsverfahren nach Anspruch 13 oder 14, das ferner Folgendes umfasst:

Durchführen des Lastausgleichsberechnens basierend auf einer voreingestellten Dienstverzögerung und durch Verwenden der globalen Lastinformationen, der globalen Dienstinformationen und der Dienstaufrufbeziehung, um eine zweite Lastausgleichsrichtlinie zu erzeugen, wobei die zweite Lastausgleichsrichtlinie verwendet wird, um die M Rechenknoten anzuweisen, die Dienstanpassung durchzuführen; und

Freigeben der zweiten Lastausgleichsrichtlinie an die M Rechenknoten.

## Revendications

1. Moteur d'équilibrage de charge, appliqué à un système informatique distribué, le moteur d'équilibrage de charge comprenant :

un module de gestion d'informations de charge, configuré pour obtenir des informations de charge globales du système informatique distribué, les informations de charge globales indiquant une charge respective de M nœuds de calcul dans le système informatique distribué ;

un module de gestion d'informations de service, configuré pour obtenir des informations de service globales du système informatique distribué, les informations de service globales indiquant des types de services fournis par les M nœuds de calcul, et M étant un nombre naturel supérieur à 1 ;

un module de calcul de politique, configuré pour effectuer un calcul d'équilibrage de charge pour un premier type de service à l'aide des informations de charge globales et des informations de service globales, pour générer une première politique d'équilibrage de charge correspondant au premier type de service, le premier type de service étant au moins l'un des types de services fournis par les M nœuds de calcul, et la première politique d'équilibrage de charge indiquant des informations de distribution d'un message de service correspondant au premier type de service dans les M nœuds de calcul ; et

un module de libération de politique, configuré pour libérer la première politique d'équilibrage de charge pour un client.

2. Moteur d'équilibrage de charge selon la revendication 1, dans lequel le moteur d'équilibrage de charge comprend en outre une vue de service globale, configurée pour obtenir une relation d'appel de service entre les M nœuds de calcul ; et

le module de calcul de politique est configuré pour effectuer un calcul d'équilibrage de charge pour le premier type de service à l'aide des informations de charge globales, des informations de service globales et de la relation d'appel de service, afin de générer la première politique d'équilibrage de charge.

3. Moteur d'équilibrage de charge selon la revendication 2, dans lequel le module de calcul de politique est spécifiquement configuré pour :

déterminer, à partir des M nœuds de calcul sur la base des informations de service globales, un nœud de calcul cible qui fournit un service du premier type de service ;

déterminer, à partir des M nœuds de calcul sur la base de la relation d'appel de service, un nœud de calcul associé qui a une relation d'appel avec le service qui est du premier type de service et qui est fourni par le nœud de calcul cible ; et

déterminer, sur la base des informations de charge globales, la charge du nœud de calcul cible et du nœud de calcul associé, et réaliser un calcul d'équilibrage de charge, pour générer la première politique d'équilibrage de charge.

4. Moteur d'équilibrage de charge selon la revendication 2, dans lequel le module de calcul de politique est en outre configuré pour effectuer un calcul d'équilibrage de charge sur la base d'un retard de service prédéfini et à l'aide des informations de charge globales, des informations de service globales et de la relation d'appel de service, pour générer une seconde politique d'équilibrage de charge, la seconde politique d'équilibrage de charge étant utilisée pour ordonner aux M nœuds de calcul d'effectuer un ajustement de service ; et

le module de libération de politique est en outre configuré pour libérer la seconde politique d'équilibrage de charge sur les M nœuds de calcul.

5. Moteur d'équilibrage de charge selon la revendication 4, dans lequel la seconde politique d'équilibrage de charge ordonne d'ajuster un rapport de distribution de messages de service entre au moins deux nœuds de calcul qui ont une relation d'appel de service.

6. Moteur d'équilibrage de charge selon la revendication 4, dans lequel la seconde politique d'équilibrage de charge ordonne d'ajuster un emplacement de service entre des nœuds de calcul qui ont une relation d'appel de service.

7. Moteur d'équilibrage de charge selon la revendication 4, dans lequel la seconde politique d'équilibrage de charge ordonne d'ajouter ou de supprimer un service entre des nœuds de calcul qui ont une relation d'appel de service.

8. Moteur d'équilibrage de charge selon l'une quelconque des revendications 1 à 7, dans lequel toutes les informations de charge globales, les informations de service globales et la relation d'appel de service sont obtenues périodiquement ; et le module de calcul de politique est configuré pour calculer périodiquement la première politique d'équilibrage de charge ou la seconde politique d'équilibrage de charge, et le module de libération de politique est configuré pour libérer périodiquement la première politique d'équilibrage de charge ou la seconde politique d'équilibrage de charge.

9. Client, appliqué à un système informatique distribué, le système informatique distribué comprenant un moteur d'équilibrage de charge et M nœuds de calcul, M étant un nombre naturel supérieur à 1, et le client comprenant :

un cache local, configuré pour obtenir et mettre en cache une première politique d'équilibrage de charge libérée par le moteur d'équilibrage de charge, la première politique d'équilibrage de charge indiquant des informations de distribution d'un message de service d'un premier type de service ;

un module de gestion de service, configuré pour recevoir une première demande de service ; et

un module de calcul de politique de charge, configuré pour : interroger le cache local ; et si la première politique d'équilibrage de charge stockée dans le cache local correspond à la première demande de service, déterminer, à partir des M nœuds de calcul sur la base des informations de distribution indiquées par la première politique d'équilibrage de charge, un nœud de calcul cible correspondant à la première demande de service, le module de gestion de service étant en outre configuré pour envoyer, au nœud de calcul cible sur la base des informations de distribution indiquées par la première politique d'équilibrage de charge, un message de service correspondant à la première demande de service.

10. Système informatique distribué, comprenant le moteur d'équilibrage de charge selon l'une quelconque des revendications 1 à 8, et M nœuds de calcul couplés au moteur d'équilibrage de charge.

11. Système informatique distribué selon la revendication 10, comprenant en outre le client selon la revendication 9.

12. Procédé d'équilibrage de charge, appliqué à un système informatique distribué, et comprenant :

l'obtention des informations de charge globales du système informatique distribué, les informations de charge globales indiquant une charge respective de M nœuds de calcul dans le système informatique distribué ;

l'obtention des informations de service globales du système informatique distribué, les informations de service globales indiquant des types de services fournis par les M nœuds de calcul, et M étant un nombre naturel supérieur à 1 ;

la réalisation d'un calcul d'équilibrage de charge pour un premier type de service à l'aide des informations de charge globales et des informations de service globales, pour générer une première politique d'équilibrage de charge correspondant au premier type de service, le premier type de service étant au moins l'un des types des services fournis par les M nœuds de calcul, et la première politique d'équilibrage de charge indiquant des informations de distribution d'un message de service correspondant au premier type de service ; et

la libération de la première politique d'équilibrage de charge à un client.

13. Procédé selon la revendication 12, le procédé comprenant en outre :

l'obtention d'une relation d'appel de service entre les M nœuds de calcul ; et

l'étape consistant à effectuer un calcul d'équilibrage de charge pour un premier type de service à l'aide des informations de charge globales et des informations de service globales, pour générer une première politique d'équilibrage de charge correspondant au premier type de service comprend :

la réalisation d'un calcul d'équilibrage de charge pour le premier type de service à l'aide des informations de charge globales, des informations de service globales et de la relation d'appel de service, pour générer la première politique d'équilibrage de charge.

14. Procédé d'équilibrage de charge selon la revendication 13, dans lequel l'étape consistant à effectuer un calcul d'équilibrage de charge pour le premier type de service à l'aide des informations de charge globales, des informations de service globales et de la relation d'appel de service, pour générer la première politique d'équilibrage de charge comprend :

la détermination, à partir des M nœuds de calcul sur la base des informations de service globales, d'un nœud de calcul cible qui fournit un service du premier type de service ;

la détermination, à partir des M nœuds de calcul sur la base de la relation d'appel de service, d'un nœud de calcul associé qui a une relation d'appel avec le service qui est du premier type de service fourni par le nœud de calcul cible ; et

la détermination, sur la base des informations de charge globales, de la charge du nœud de calcul cible et du nœud de calcul associé, et la réalisation d'un calcul d'équilibrage de charge, pour générer la première politique d'équilibrage de charge.

15. Procédé selon la revendication 13 ou 14, comprenant en outre :

la réalisation d'un calcul d'équilibrage de charge sur la base d'un retard de service prédéfini et à l'aide des informations de charge globales, des informations de service globales et de la relation d'appel de service, pour générer une seconde politique d'équilibrage de charge, la seconde politique d'équilibrage de charge étant utilisée pour ordonner aux M nœuds de calcul d'effectuer un ajustage de service ; et

la libération de la seconde politique d'équilibrage de charge aux M nœuds de calcul.

10

Domain
name system
DNS ⌒ 14

11 ⌒
Client → Load balancer ⌒ 12 → Computing
node ⌒ 13

FIG. 1

20

Server ⌒ 23

21 ⌒
Client  LB ⌒ 211 →  Computing
node ⌒ 22

FIG. 2

FIG. 3

FIG. 4

FIG. 5

FIG. 6

EP 3 637 733 B1

| Computing node 331 | 3000 msg/s Service A1 | 2000 msg/s Service B1 |

Message ratio adjustment

FIG. 7a

FIG. 7b

FIG. 8a

FIG. 8b

FIG. 9a

FIG. 9b

## Computing node 331

Service A

2000 msg/s

Service B

Service C

2000 msg/s

1000 msg/s

## Computing node 332

Service D

Service E

Service B2

Service C2

FIG. 9c

400

System memory 430

ROM 431

BIOS 433

RAM 432

Operating system 434

Application program 435

Another program module 436

Program data 437

Processor 420

Input/output interface 470

Input/output device 471

System bus 410

Nonremovable storage interface 440

Removable storage interface 450

Network interface 460

Hard disk memory 441

Remote computer 461

Operating system 442

Application program 443

Another program module 444

Program data 445

External memory 451

FIG. 10

500

Processor
51

54

Memory
52

Network
interface
53

FIG. 11

| Client | Load balancing engine | | M computing nodes |
|---|---|---|---|

S101. Obtain global load information

S102. Obtain global service information

S103. Obtain a service calling relationship

S104. Perform load balancing computing for a first service type by using the global load information and the global service information, to generate a first load balancing policy corresponding to the first service type

S105. Release the first load balancing policy to a client

S106. Perform load balancing computing based on a principle of a minimum service delay and by using the global load information, the global service information, and the service calling relationship, to generate a second load balancing policy

S107. Release the second load balancing policy to M computing nodes

FIG. 12

| Load balancing engine | | Client | | M computing nodes |
|---|---|---|---|---|

S201. Obtain and cache a first load balancing policy released by a load balancing engine

S202. Receive a first service request

S203. If the cached first load balancing policy matches the first service request, determine, from M computing nodes based on a distribution path indicated by the first load balancing policy, a target computing node matching the first service request

S204. Send, to the target computing node based on distribution information indicated by the first load balancing policy, a service message corresponding to the first service request

FIG. 13

```
┌──────────┐              ┌──────────────┐
│   Load   │              │  Computing   │
│balancing │              │node/Management│
│  engine  │              │    node      │
└──────────┘              └──────────────┘
     │                          │
     │                          │
     │  S301. Obtain a second load
     │   balancing policy released
     │   by a load balancing engine
     │                          │
     │─────────────────────────▶│
     │                          │  S302. Perform service
     │                          │   adjustment on M
     │                          ├─┐ computing nodes based
     │                          │ │  on the second load
     │                          │◀┘  balancing policy
     │                          │
     │                          │
```

FIG. 14